(19) Europäisches Patentamt
European Patent Office
Office européen des brevets

(11) **EP 2 742 499 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(21) Anmeldenummer: **12722302.2**

(22) Anmeldetag: **18.05.2012**

(51) Int Cl.:
*G08G 1/16* *(2006.01)*

(86) Internationale Anmeldenummer:
**PCT/EP2012/002128**

(87) Internationale Veröffentlichungsnummer:
**WO 2013/023712 (21.02.2013 Gazette 2013/08)**

(54) **RÜCKRAUMÜBERWACHUNGSEINRICHTUNG FÜR EIN FAHRZEUG, ELEKTRONISCHE STEUERUNGSEINRICHTUNG UND FAHRZEUG MIT EINER RÜCKRAUMÜBERWACHUNGSEINRICHTUNG**

REAR AREA MONITORING DEVICE FOR A VEHICLE, ELECTRONIC CONTROL UNIT AND VEHICLE HAVING A REAR AREA MONITORING DEVICE

SYSTÈME DE SURVEILLANCE DE L'ARRIÈRE D'UN VÉHICULE, SYSTÈME DE COMMANDE ÉLECTRONIQUE ET VÉHICULE ÉQUIPÉ D'UN SYSTÈME DE SURVEILLANCE DE L'ARRIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2011 DE 102011110409**

(43) Veröffentlichungstag der Anmeldung:
**18.06.2014 Patentblatt 2014/25**

(73) Patentinhaber: **WABCO GmbH**
**30453 Hannover (DE)**

(72) Erfinder:
• **RISSE, Rainer**
**30982 Pattensen-Reden (DE)**

• **RONNENBERG, Udo**
**30900 Wedemark (DE)**
• **STENDER, Axel**
**31787 Hameln (DE)**
• **VON DER BEEKE, Jan-Christoph**
**38106 Braunschweig (DE)**

(74) Vertreter: **Lauerwald, Jörg et al**
**Wabco GmbH**
**Am Lindener Hafen 21**
**30453 Hannover (DE)**

(56) Entgegenhaltungen:
**EP-A1- 0 939 003**     **EP-A2- 1 434 186**
**DE-A1-102009 021 282**     **DE-A1-102009 032 542**
**US-A1- 2006 103 512**

**Beschreibung**

Rückraumüberwachungseinrichtung für ein Fahrzeug, elektronische Steuerungseinrichtung und Fahrzeug mit einer Rückraumüberwachungseinrichtung Die Erfindung betrifft eine Rückraumüberwachungseinrichtung für ein Fahrzeug gemäß dem Oberbegriff des Anspruchs 1. Die Erfindung betrifft zudem eine elektronische Steuerungseinrichtung einer solchen einer Rückraumüberwachungseinrichtung gemäß dem Anspruch 9. Die Erfindung betrifft ferner ein Fahrzeug mit einem verstellbaren und in bestimmten Positionen über das Fahrzeugheck hinausragenden Fahrzeugbauteil und einer solchen Rückraumüberwachungseinrichtung gemäß dem Anspruch 10. Rückraumüberwachungseinrichtungen werden bei Personenkraftwagen und Nutzfahrzeugen verwendet, um dem Fahrer beim Rückwärtsfahren, z. B. beim Einparken in eine Parklücke, den Abstand des Fahrzeughecks zu einem Hindernis bzw. die Unterschreitung eines Mindestabstands zu dem Hindernis zu signalisieren. Im Bereich von Nutzfahrzeugen, d. h. Lastkraftwagen und deren Anhängern, werden Rückraumüberwachungseinrichtungen z. B. zur Unterstützung des Fahrers beim Rückwärts-Heranfahren an eine Laderampe eingesetzt. Eine bekannte Rückraumüberwachungseinrichtung geht z. B. aus der DE 198 31 262 C2 hervor.

Das Dokument US 2006/0103512 A1 offenbart ein Hinderniserfassungssystem für Fahrzeuge, wobei vorbestimmte Abstände in Abhängigkeit eines an einer Heckklappe des Fahrzeuges angeordneten Ausgangssignals eines Schalters eingestellt werden können. Das Dokument DE 10 2009 032 542 A1 offenbart ein Fahrerassistenzsystem, das mit Hilfe von Sensoren eine Lage eines Objektes in der Umgebung eines Fahrzeugs erfasst und den Abstand zwischen dem Objekt und dem Fahrzeug berechnet. Es wird für zu mindest ein Bauteil des Fahrzeugs ein Zustand erfasst, wobei es sich dabei immer um ein Bauteil, durch das abhängig von seinem Zustand die äußere Form des Fahrzeugs bestimmt ist. Abhängig von dem erfassten Zustand wird ein Model angepasst, mittels welchem das Fahrassistenzsystem ein Abstand zu dem Objekt berechnet. Der Erfindung liegt die Aufgabe zu Grunde, die Einsatzmöglichkeiten und Anwendungsfelder der bekannten Rückraumüberwachungseinrichtung zu erweitern.

Diese Aufgabe wird gelöst durch eine Rückraumüberwachungseinrichtung für ein Fahrzeug gemäß Anspruch 1. Die Erfindung hat den Vorteil, dass die Rückraumüberwachungseinrichtung vielfältiger eingesetzt werden kann und besser auf die jeweiligen Einsatzbedingungen des Fahrzeugs abgestimmt werden kann. So ist insbesondere bei Nutzfahrzeugen eine große Vielfalt an Fahrzeugaufbauten, beweglichen Türen und Klappen, wie z. B. eingebaute Ladebordwände, Hebebühnen am Heck des Fahrzeugs oder Heckklappen vorhanden. Solche speziellen Fahrzeugbauteile haben zur Folge, dass ein Fahrzeugbauteil über das Fahrzeugheck hinausragen kann, so dass ein am Fahrzeugheck angeordneter Abstandssensor zumindest nicht ohne Weiteres das Risiko eines Aufpralls des über das Fahrzeugheck hinausragenden Fahrzeugbauteils an dem Hindernis erkennen kann. Hierzu wird ein Positionssensor vorgeschlagen, der zur Erfassung der Position wenigstens eines verstellbaren und in bestimmten Positionen über das Fahrzeugheck hinausragenden Fahrzeugbauteils eingerichtet ist, und die Berücksichtigung des Signals des Positionssensors bei der Bestimmung des Abstandssignals. Hierdurch kann ein realitätsgetreueres Abstandssignal erzeugt werden kann.

Die Rückraumüberwachungseinrichtung kann z. B. vorteilhaft für Fahrzeuge mit einer Ladebordwand oder einer Heckklappe verwendet werden, z. B. für Innenlader für Glasscheiben mit großer Heckklappe.

Der Positionssensor kann unterschiedlich realisiert werden, z. B. in Form eines preisgünstigen Schaltkontakts, der mechanisch von dem Fahrzeugbauteil in bestimmten Positionen beaufschlagt wird, als Näherungsschalter im Bereich des verstellbaren Fahrzeugbauteils, als Wegsensor, z. B. mit einem Potentiometer, oder als Ultraschallsensor. Vorteilhaft kann der Positionssensor auch als Drucksensor oder Druckschalter ausgebildet sein, der den Druck einer hydraulischen Betätigungseinrichtung des verstellbaren Fahrzeugbauteils sensiert. In vielen Fällen weist das verstellbare Fahrzeugbauteil auch bereits einen Positionssensor auf, der über den Eingangsanschluss mit der elektronischen Steuerungseinrichtung verbunden werden kann. Der Positionssensor kann auch als zusätzliches Bauteil der Rückraumüberwachungseinrichtung vorgesehen sein. In diesem Fall ist der Positionssensor über den Eingangsanschluss mit der elektronischen Steuerungseinrichtung verbunden.

Das Abstandssignal kann ein Signal sein, dass den Abstand des Fahrzeughecks von einem Hindernis direkt zahlenmäßig angibt, z. B. den Abstand in Metern oder Zentimetern. Das Abstandssignal kann auch ein bereits vorverarbeitetes oder entsprechend ausgewertetes Signal sein, das eine Information darüber enthält, ob der Abstand des Fahrzeughecks von einem Hindernis schon geringer ist als ein vorgegebener Grenzwert oder nicht.

Als Fahrzeugheck wird der hinterste Teil des Fahrzeuges verstanden, der nicht verstellbar ist, wie z. B. eine hintere Stoßstange oder die hintere Ladekante einer Ladefläche.

Gemäß einer vorteilhaften Weiterbildung der Erfindung ist die elektronische Steuerungseinrichtung dazu eingerichtet, die von dem oder den Abstandssensoren erfassten Daten um einen vorgegebenen Differenzwert zu korrigieren, wenn das Signal des Positionssensors ein über das Fahrzeugheck hinausragendes Fahrzeugbauteil anzeigt. Dies hat den Vorteil, dass eine genauere Bestimmung des Abstands des Fahrzeughecks von einem Hindernis je nach eingenommener Position des verstellbaren Fahrzeugbauteils rechnerisch durch die elektronische Steuerungseinrichtung vorgenommen werden kann, so dass die Berücksichtigung des Positionssignals auf kostengünstige Weise realisiert werden kann, z. B. in Form einer Erweiterung der Programmierung der elektronischen Steuerungseinrichtung. So kann z. B. vorgesehen sein, dass das Abstandssignal entsprechend den von dem oder den Abstandssensoren gelieferten Daten bestimmt wird, wenn das Signal des Positionssensors ein über das Fahrzeugheck hinausragendes Fahrzeugbauteil nicht anzeigt. Wenn das Signal des Positionssensors hingegen ein über das Fahrzeugheck hinausragendes Fahrzeugbauteil anzeigt, wird von dem oder den von den Abstandssensoren erfassten Daten der vorgegebene Differenzwert abgezogen, um das Abstandssignal zu bestimmen. Der vorgegebene Differenzwert kann z. B. auf die maximale Ausladung des verstellbaren Fahrzeugbauteils über das Fahrzeugheck hinaus festgelegt sein, z. B. bei Fahrzeugen mit Ladebordwand einen Wert von 2 m haben.

Gemäß einer vorteilhaften Weiterbildung der Erfindung ist die elektronische Steuerungseinrichtung dazu eingerichtet, die von dem oder den Abstandssensoren erfassten Daten mit wenigstens einem vorgegebenen ersten Grenzwert zu vergleichen und hieraus ein Abstandssignal zu bestimmen, dass das Erreichen oder Unterschreiten eines vorgegebenen Abstands des Fahrzeughecks von dem Hindernis indiziert. Dies hat den Vorteil, dass das Abstandssignal bereits eine Bewertung des Abstands des Fahrzeughecks von dem Hindernis beinhaltet, die für den Fahrer hilfreich sein kann. Über das in dieser Art bewertete Abstandssignal kann z. B. eine Warnung erzeugt werden, wie z. B. ein akustisches, haptisches oder optisches Warnsignal. Der Fahrzeugführer ist dann gewarnt, dass das Fahrzeug sich bereits relativ dicht an dem Hindernis befindet. Die elektronische Steuerungseinrichtung kann auch dazu eingerichtet sein, die von den Abstandssensoren erfassten Daten mit verschiedenen Grenzwerten zu vergleichen und hieraus ein entsprechend abgestuftes Abstandssignal zu bestimmen, das das Erreichen oder Unterschreiten der einzelnen Grenzwerte differenziert indiziert. Das Erreichen oder Unterschreiten der einzelnen Grenzwerte kann z. B. durch unterschiedliche Warnsignale angezeigt werden.

Gemäß einer vorteilhaften Weiterbildung der Erfindung ist die elektronische Steuerungseinrichtung dazu eingerichtet, die von dem oder den Abstandssensoren erfassten Daten, den vorgegebenen ersten Grenzwert oder die Differenz zwischen den von dem oder den Abstandssensoren erfassten Daten und dem vorgegebenen ersten Grenzwert um einen vorgegebenen Differenzwert zu korrigieren oder für den Vergleich einen vorgegebenen zweiten Grenzwert zu verwenden, wenn das Signal des Positionssensors ein über das Fahrzeugheck hinausragendes Fahrzeugbauteil anzeigt. Der zweite Grenzwert kann z. B. um den vorgegebenen Differenzwert größer sein als der erste Grenzwert. Die genannte Weiterbildung hat den Vorteil, dass das durch Vergleich mit dem ersten bzw. dem zweiten Grenzwert gewonnene Abstandssignal realitätsnäher ist als bei bekannten Rückraumüberwachungseinrichtungen. So muss z. B.

nicht vorsorglich, um eventuelle Beschädigungen durch ein über das Fahrzeugheck hinausragendes Fahrzeugbauteil zu vermeiden, das Abstandssignal grundsätzlich bereits mit dem Differenzwert korrigiert sein, sondern die Korrektur kann abhängig vom Signal des Positionssensors erfolgen. Ein weiterer Vorteil ist, dass die Berücksichtigung des Positionssignals rechnerisch durch die elektronische Steuerungseinrichtung vorgenommen werden kann und damit auf kostengünstige Weise realisiert werden kann, z. B. in Form einer Erweiterung der Programmierung der elektronischen Steuerungseinrichtung.

Gemäß einer vorteilhaften Weiterbildung der Erfindung ist die elektronische Steuerungseinrichtung dazu eingerichtet, das Abstandssignal über Ausgabemittel der Rückraumüberwachungseinrichtung oder über eine Schnittstelle zu sonstigen Ausgabemitteln des Fahrzeugs optisch, haptisch und/oder akustisch auszugeben. Das Ausgabemittel kann z. B. ein Anzeigedisplay der Rückraumüberwachungseinrichtung oder des Fahrzeugs sein, z. B. im Armaturenbrett des Fahrzeugs. Auf dem Anzeigedisplay kann das Abstandssignal z. B. im Klartext in Form eines Abstands in Metern oder Zentimetern angezeigt werden. Das Abstandssignal kann auch in bereits ausgewerteter Form über das Ausgabemittel ausgegeben werden, z. B. nach Vergleich mit dem ersten Grenzwert, indem bei Erreichen oder Unterschreiten eines vorgegebenen Abstands des Fahrzeughecks von dem Hindernis ein Warnsignal ausgegeben wird. Das Abstandssignal bzw. das Warnsignal kann optisch, z. B. durch eine Lampe oder das genannte Anzeigedisplay, ausgegeben werden. Das Abstandssignal kann auch haptisch ausgegeben werden, z. B. durch aktiv betätigbare Bedienelemente des Fahrzeugs, z. B. ein Gaspedal mit Force-Feedback-Funktion, oder über eine Ansteuerung der Fahrzeugsitzverstellung, z. B. in der Art eines Vibrationsalarms. Das Warnsignal kann auch akustisch ausgegeben werden, z. B. in Form von Warntönen gleicher oder unterschiedlicher Frequenz.

Gemäß einer vorteilhaften Weiterbildung der Erfindung ist die elektronische Steuerungseinrichtung dazu eingerichtet, in Abhängigkeit vom Abstandssignal ein Bremsbetätigungssignal zu erzeugen, durch das wenigstens eine Fahrzeugbremse automatisch betätigt wird. Dies hat den Vorteil, dass das Fahrzeug in Folge der automatischen Bremsung sicher mit noch ausreichendem Abstand zu dem Hindernis angehalten werden kann und damit Beschädigungen an dem Fahrzeug und einer Laderampe sicherer vermieden werden können. Die elektronische Steuerungseinrichtung kann das Bremsbetätigungssignal z. B. über einen Datenbus an eine Bremssteuerungseinrichtung senden, die dann für die Betätigung der Fahrzeugbremse sorgt. Die elektronische Steuerungseinrichtung kann auch Teil eines elektronisch gesteuerten Bremssystems sein, so dass das Bremsbetätigungssignal direkt in eine Betätigung der Fahrzeugbremse umgesetzt werden kann. Diese Weiterbildung hat den Vorteil, dass das Fahrzeug in Folge der realitätsnäheren Bestimmung des Abstandssignals in einem sinnvollen Abstand zu einer Laderampe automatisch angehalten werden kann. Es muss nicht z. B. aus Sicherheitsgründen ein zu großer Abstand von der Laderampe eingehalten werden, um eventuelle Beschädigungen durch über das Fahrzeugheck hinausragende Fahrzeugbauteile zu vermeiden, obwohl bei nicht hinausragendem Fahrzeugbauteil an sich noch genügend Sicherheitsabstand zum Rangieren vorhanden ist. Daher lassen sich Beladungs- und Entladungsvorgänge von Nutzfahrzeugen sicherer, schneller und effizienter durchführen, da sozusagen automatisch der richtige Abstand zur Laderampe hergestellt werden kann, der für ein Beladen bzw. Entladen erforderlich ist.

Gemäß der Erfindung weist die Rückraumüberwachungseinrichtung wenigstens zwei Abstandssensoren auf. Die elektronische Steuerungseinrichtung ist dazu eingerichtet, das Abstandssignal in Abhängigkeit von den von einer ersten Teilmenge der Abstandssensoren erfassten Daten zu bestimmen, wenn das Signal des Positionssensors ein über das Fahrzeugheck hinausragendes Fahrzeugbauteil nicht anzeigt. Die elektronische Steuerungseinrichtung ist dazu eingerichtet, das Abstandssignal in Abhängigkeit von den von einer zweiten Teilmenge der Abstandssensoren erfassten Daten zu bestimmen, wenn das Signal des Positionssensors ein über das Fahrzeugheck hinausragendes Fahrzeugbauteil anzeigt. Dies hat den Vorteil, dass unterschiedlich am Fahrzeug angeordnete Abstandssensoren für die Bestimmung des Abstandssignals automatisch berücksichtigt werden können. So kann es z. B. vorkommen, dass das über das Fahrzeugheck hinausragende Fahrzeugbauteil einzelne Abstandssensoren hinsichtlich ihrer Erfassung von Hindernissen beeinträchtigt, wenn es über das Fahrzeugheck hinausragt. Z. B. eine heruntergeklappte Ladebordwand kann einzelne in Form von Ultraschallsensoren ausgebildete Abstandssensoren, die am Fahrzeugheck auf Höhe des Ladefläche angebrachte Abstandssensoren überdecken, so dass diese dann nicht zur Bestimmung eines sinnvollen Abstandssignals beitragen können. Durch die Berücksichtigung des Signals des Positionssensors kann solchen Effekten Rechnung getragen werden.

Gemäß einer vorteilhaften Weiterbildung der Erfindung ist die erste Teilmenge der Abstandssensoren zur Anbringung am Fahrzeugheck und die zweite Teilmenge der Abstandssensoren zur Anbringung an dem verstellbaren und in bestimmten Positionen über das Fahrzeugheck hinausragenden Fahrzeugbauteil eingerichtet. Dies hat den Vorteil, dass in einer Position des verstellbaren Fahrzeugbauteils, in der dieses nicht über das Fahrzeugheck hinausragt, die erste Teilmenge der Abstandssensoren zur Abstandssignalbestimmung herangezogen werden kann. Bei über das Fahrzeugheck hinausragendem Fahrzeugbauteil kann die zweite Teilmenge der Abstandessensoren zur Bestimmung des Abstandssignals herangezogen werden, wobei diese Abstandssensoren dann quasi automatisch den korrekten Abstand zu dem Hindernis indizieren, da sie zusammen mit dem verstellbaren Fahrzeugbauteil über das Fahrzeugheck hinausragen. Ein weiterer Vorteil ist, dass die gesamte Erfassungsreichweite der Rückraumüberwachungseinrichtung auf größere Distanzen erweitert werden kann.

Die Erfindung betrifft ferner eine Rückraumüberwachungseinrichtung der zuvor beschriebenen Art, wobei die elektronische Steuerungseinrichtung einen oder mehrere Anschlüsse zum Anschluss des einen oder der mehreren Abstandssensoren aufweist.

Die Erfindung betrifft ferner ein Fahrzeug mit einem verstellbaren und in bestimmten Positionen über das Fahrzeugheck hinausragenden Fahrzeugbauteil und einer Rückraumüberwachungseinrichtung der zuvor beschriebenen Art.

Gemäß einer vorteilhaften Weiterbildung der Erfindung weist die Rückraumüberwachungseinrichtung wenigstens zwei Abstandssensoren auf. Eine erste Teilmenge der Abstandssensoren ist am Fahrzeugheck angebracht. Eine zweite Teilmenge der Abstandssensoren ist an dem verstellbaren und in bestimmten Positionen über das Fahrzeugheck hinausragenden Fahrzeugbauteil angebracht.

Die Erfindung wird nachfolgend anhand von Ausführungsbeispielen unter Verwendung von Zeichnungen näher erläutert.

Es zeigen

Figur 1    - einen sich bei Rückwärtsfahrt einer Laderampe nähernden Fahrzeugzug in schematischer Darstellung und

Figur 2    - eine Detailansicht eines Rammpuffers mit einem darin befindlichen Abstandssensor und

Figur 3    - eine heckseitige Ansicht des Fahrzeugzugs gemäß Figur 1 als perspektivische Darstellung und

Figur 4    - eine weitere Ausführungsform eines Fahrzeugzugs mit einem verstellbaren Fahrzeugbauteil und

Figur 5    - eine Rückraumüberwachungseinrichtung.

In den Figuren werden gleich Bezugszeichen für einander entsprechende Elemente verwendet.

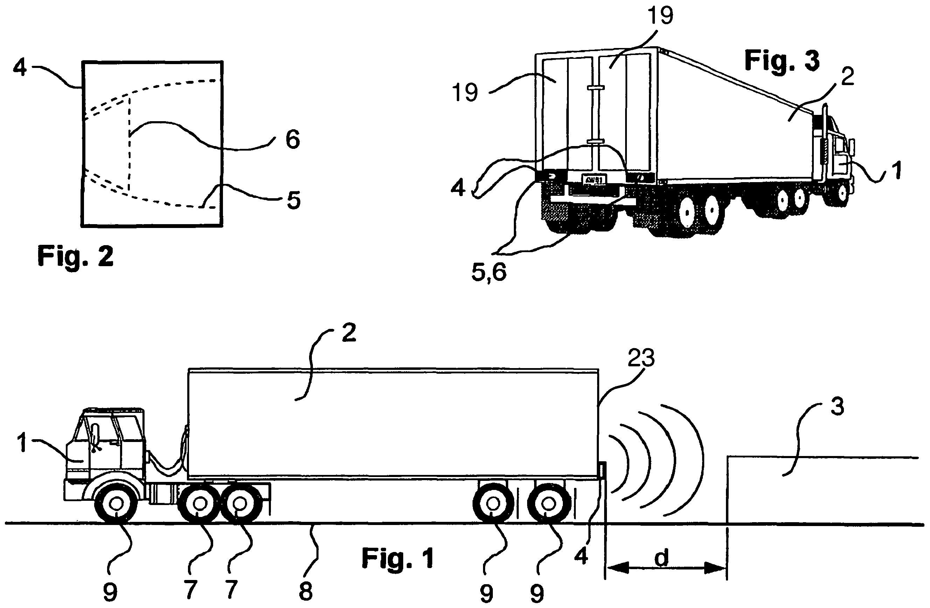

In der Figur 1 ist ein Fahrzeug am Beispiel eines Fahrzeugzuges mit einer Sattelzugmaschine 1 und einem an die Sattelzugmaschine 1 angekoppelten Auflieger 2 dargestellt. Die Erfindung eignet sich aber für alle Arten von Fahrzeugen, auch Personenkraftwagen und Lastkraftwagen mit anderen Arten von Anhängern.

Die Sattelzugmaschine 1 weist einen Antriebsmotor auf, dessen Antriebskraft über ein von dem Fahrer des Fahrzeuges betätigbares Getriebe an die Antriebsräder 7 der Sattelzugmaschine 1 und somit an die Fahrbahn 8 abgegeben wird. Antriebsmotor und Getriebe sind von bekannter Bauart und daher in der Figur 1 nicht dargestellt.

Des weiteren weist sowohl die Sattelzugmaschine 1 als auch der Auflieger 2 jeweils eine Bremsanlage auf, mittels der in Abhängigkeit von der Betätigung eines in der Sattelzugmaschine 1 angeordneten Bremspedals bei Betätigung durch den Fahrer eine Bremskraft auf die Räder 7 der Sattelzugmaschine 1 und der Räder 9 des Aufliegers 2 ausgeübt werden kann.

In einer vorteilhaften Ausführungsform sind sowohl der Antriebsmotor als auch die Bremsanlagen von Sattelzugmaschine und Auflieger mittels elektrischer Signale steuerbar. Derartige Bremsanlagen bezeichnet man üblicherweise als elektrisch steuerbare Bremssysteme oder kurz EBS, wie beispielsweise aus der EP 0 602 353 A1 bekannt. Zur Steuerung der Bremsanlage ist dann mindestens ein elektronisches Steuergerät vorgesehen, welches Bremsanforderungssignale von einem von dem Fahrer mittels des Bremspedals betätigbaren Bremswertgeber empfängt und hieraus Bremsbetätigungssignale bestimmt, die an die an den Rädern 7, 9 angeordneten Bremseinrichtungen abgegeben werden.

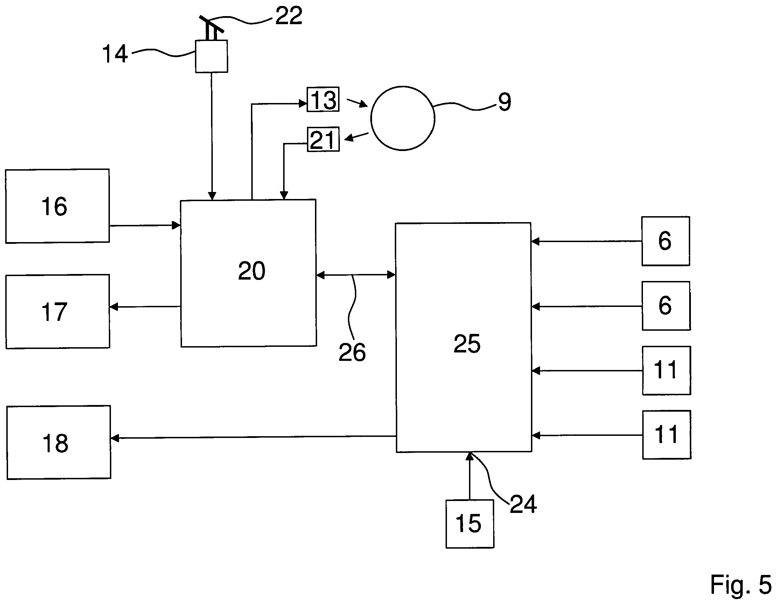

Des Weiteren ist ein Sensor 21 zur Ermittlung eines Geschwindigkeitssignals vorgesehen, wie in der Figur 5 schematisch dargestellt. Bekannt ist, hierfür den Tachometer des Fahrzeuges zu verwenden. Es ist ebenfalls vorteilhaft, hierzu einen in der Nähe eines Fahrzeugrades angeordneten Sensor zur Ermittlung der Drehgeschwindigkeit des Rades, wie von Antiblockiersystemen her bekannt ist, zu verwenden. Dies hat den Vorteil, dass die Fahrzeuggeschwindigkeit sehr zuverlässig und mit einer hohen Genauigkeit ermittelt werden kann.

Das Fahrzeug gemäß Figur 1 weist des Weiteren zwei am Heck 23 des Aufliegers 2, das hier dem Fahrzeugheck entspricht, angeordnete Rammpuffer 4 auf, die jeweils an der linken und der rechten Fahrzeugseite unter der Ladeflächenkante angeordnet sind. Die Anordnung der Rammpuffer 4 ist zusätzlich in der Figur 3 dargestellt. Die Rammpuffer 4 sind vorzugsweise aus einem elastischen Material, z. B. Gummi, hergestellt und dienen dazu, das Fahrzeug bei Rückwärtsfahrt vor Beschädigungen infolge des Aufpralls auf ein Hindernis 3, z. B. eine Laderampe, zu schützen.

Zusätzlich sind bei dem Fahrzeugzug gemäß Figur 1 noch zwei jeweils in den Rammpuffern 4 angeordnete Abstandssensoren vorgesehen, die zur Vermeidung von Beschädigungen nicht aus den Rammpuffern 4 hinausragen. Die Anordnung eines Abstandssensors 6 in einem Rammpuffer 4 ist in der Figur 2 näher dargestellt. Der Rammpuffer 4 weist eine Ausnehmung 5 auf, die nach Art eines Trichters, der in Rückwärtsfahrtrichtung des Fahrzeuges gerichtet ist, ausgebildet ist. Innerhalb dieser Ausnehmung 5 ist der Abstandssensor 6 angeordnet, der z.B. als Ultraschallsensor ausgebildet ist. Der Abstandssensor 6 sendet z. B. auf Anforderung von einem elektronischen Steuergerät ein Schallsignal aus und gibt bei Empfang von Reflexionen dieses Schallsignals ein Rückmeldesignal an das Steuergerät ab. Aus der zeitlichen Differenz zwischen der Anforderung einer Schallabgabe und dem Rückmeldesignal kann in bekannter Weise auf den Abstand D zwischen dem Abstandssensor und dem Hindernis 3 geschlossen werden.

Die Ausnehmung 5 weist z. B. eine Kontur auf, durch die der ausgesendete Schall des Abstandssensors 6 gebündelt wird, z. B. eine parabolische oder elliptische Kontur.

Statt der Anbringung der Abstandssensoren 6 oder anderer Abstandssensoren in dem beschriebenen Rammpuffer können die Abstandssensoren auch als separate Bauteile an dem Fahrzeug 1, 2 angeordnet werden, z. B. neben Rammpuffern oder an anderen Stellen. Die Abstandssensoren können, wie in den Figuren 1, 3 dargestellt, am Fahrzeugheck etwa auf Höhe der Beladungsfläche oder auch an anderen Stellen angeordnet sein, z. B. an einer heckseitigen Stoßstange.

Der anhand der Figuren 1 und 3 beschriebene Fahrzeugzug weist als verstellbare Fahrzeugbauteile, die in bestimmten Positionen über das Fahrzeugheck hinausragen, zwei um eine jeweilige Vertikalachse verschwenkbare Türen 19 auf. Wenn die Türen 19 geöffnet sind, stehen sie über das Fahrzeugheck 23 um ein bestimmtes Maß über.

Die Türen 19 sind mit Positionssensoren bestückt, z. B. in Form von Näherungsschaltern, durch die die Position der Türen 19 erfasst wird.

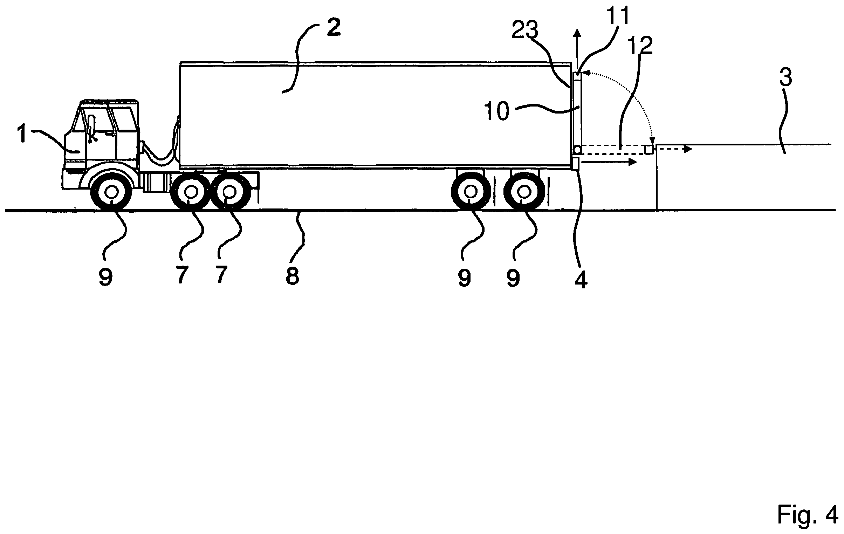

Die Figur 4 zeigt eine Ausführungsform eines Fahrzeugzuges, bei der der Auflieger 2 als verstellbares Fahrzeugbauteil eine um eine Horizontalachse verschwenkbare Ladebordwand 10 aufweist. Die Figur 4 zeigt die Ladebordwand 10 mit durchgezogenen Linien in nicht ausgefahrener Stellung und mit gestrichelten Linien in einer ausgefahrenen Position 12. In der ausgefahrenen Position 12 ragt die Ladebordwand 10 über das Fahrzeugheck 23 hinaus. Ein von dem Rammpuffer 4 ausgehender nach rechts zeigender Pfeil zeigt die Erfassungsrichtung der Abstandssensoren 6 an. Wie erkennbar ist, messen die Abstandssensoren 6 bei ausgefahrener Position 12 der Ladebordwand 10 nicht den richtigen Abstand zur Laderampe 3. Daher sind in der Ausführungsform gemäß Figur 4 zwei weitere Abstandssensoren 11 an der Ladebordwand 10 angebracht. Der in der nicht ausgefahrenen Stellung des Ladebordwand 10 von den weiteren Abstandssensoren 11 nach oben weisende Pfeil zeigt die Erfassungsrichtung dieser Abstandssensoren an. In der ausgefahrenen Position 12 der Ladebordwand 10 ist die Erfassungsrichtung der weiteren Abstandssensoren 11 durch den gestrichelten Pfeil dargestellt.

Die Figur 5 zeigt eine Rückraumüberwachungseinrichtung, die z. B. an dem Fahrzeug gemäß Figur 1, 3 oder an dem Fahrzeug gemäß Figur 4 angeordnet sein kann, z.B. an der Sattelzugmaschine 1 oder dem Auflieger 2. Die Rückraumüberwachungseinrichtung weist eine elektronische Steuerungseinrichtung 20, 25 auf, die z. B. einen Mikroprozessor aufweist, der ein verschiedene Steuer- und Regelfunktionen aufweisendes Steuerprogramm ausführt. Die elektronische Steuerungseinrichtung 20, 25 kann einteilig oder mehrteilig aufgebaut sein. In der Figur 5 wird beispielhaft eine mehrteilige Ausbildung dargestellt, bei der eine Bremsensteuerungseinrichtung 20 und eine Rückraumüberwachungs-Steuerungseinrichtung 25 als separate Elektronikmodule vorgesehen sind. In einer vorteilhaften Ausgestaltung können die Elektronikmodule auch als eine gemeinsame elektronische Steuerungseinrichtung ausgebildet sein.

Die Bremssteuerungseinrichtung 20 empfängt von einer Getriebesteuerung 16 Eingangssignale, z. B. ein Rückwärtsfahrtsignal, das anzeigt, wenn der Rückwärtsgang eingelegt ist. Ferner empfängt die Bremssteuerungseinrichtung 20 von einem Bremswertgeber 14, der ein Bremspedal 22 aufweist, ein Bremsanforderungssignal, welches den Fahrerwunsch für eine Bremsbetätigung indiziert. Ferner empfängt die Bremssteuerungseinrichtung 20 von einem oder mehreren Geschwindigkeitssensoren 21, die z. B. als Raddrehgeschwindigkeitssensoren eines Antiblockiersystems ausgebildet sein können, ein Geschwindigkeitssignal, das die Fahrzeuggeschwindigkeit anzeigt. Die Bremssteuerungseinrichtung 20 kann als Ausgangssignale Betätigungssignale an einen Bremsaktuator 13 und eine Motorsteuerung 17 abgeben. Über die Betätigungssignale kann die Bremssteuerungseinrichtung 20 z. B. die Motordrehzahl oder Motorleistung auf einen geringeren Wert einstellen als vom Fahrer vorgegeben. Zudem kann mittels des Bremsaktuators 13 eine mit den Fahrzeugrädern 7, 9 verbundene Fahrzeugbremse automatisch betätigt werden.

Die Rückraumüberwachungs-Steuerungseinrichtung 25 empfängt von den Abstandssensoren 6, 11 Daten und bestimmt hieraus ein Abstandssignal, das den Abstand des Fahrzeughecks 23 von einem Hindernis, z. B. der Laderampe 3, indiziert. Das Abstandssignal kann die Rückraumüberwachungs-Steuerungseinrichtung 25 z. B. an ein Ausgabemittel 18, z. B. ein Anzeigedisplay, eine Warnlampe oder einen akustischen Signalgeber, abgeben.

Die Rückraumüberwachungs-Steuerungseinrichtung 25 weist ferner einen Eingangsanschluss 24 zum Anschluss eines Positionssensors 15 auf. Es können auch mehrere Anschlüsse 24 für mehrere Positionssensoren vorgesehen sein. Es ist ebenfalls möglich, mehrere Positionssensoren an den einen Eingangsanschluss 24 anzuschließen, z. B. indem die Positionssensoren miteinander verschaltet werden. Der Positionssensor 15 gibt ein Signal an die Rückraumüberwachungs-Steuerungseinrichtung 25 ab, das anzeigt, ob das über das Fahrzeugheck hinausragende Fahrzeugbauteil, d. h. die Türen 19 oder die Ladebordwand 10, in einer über das Fahrzeugheck 23 hinausragenden Position sind oder nicht.

Die Abstandssensoren 6 liefern dabei Daten D1, die Abstandssensoren 11 liefern Daten D2. Sofern nur die Abstandssensoren 6 vorhanden sind, wie bei dem Fahrzeug gemäß den Figuren 1 und 3, so liefern diese Abstandssensoren die Daten D.

Die Rückraumüberwachungs-Steuerungseinrichtung 25 bestimmt das Abstandssignal auf Grund der Daten D1 der Abstandssensoren 6, wenn der Hubboden 10 nicht ausgefahren ist, d. h. sich in der vertikalen Position befindet. Wenn der Hubboden 10 ausgefahren wird und sich in der horizontalen Stellung 12 befindet, bestimmt die Rückraumüberwachungs-Steuerungseinrichtung 25 das Abstandssignal auf Grund der Daten D2 der weiteren Abstandssensoren 11. Die Abstandssensoren 6 bilden damit eine erste Teilmenge der Abstandssensoren, die Abstandssensoren 11 bilden eine zweite Teilmenge der Abstandssensoren.

Bei der Ausführungsform des Fahrzeugs gemäß den Figuren 1 und 3, bei der keine weiteren Abstandssensoren 11 vorgesehen sind, bestimmt die Rückraumüberwachungs-Steuerungseinrichtung 25 das Abstandssignal bei geschlossenen Türen 19 direkt aus den Daten D der Abstandssensoren 6. Bei geöffneten Türen 19 subtrahiert die Rückraumüberwachungs-Steuerungseinrichtung 25 von den Daten der Abstandssensoren 6 einen vorgegebenen Differenzwert, der dem Maß entspricht, um das die Türen 19 über das Fahrzeugheck 23 maximal hinausragen können.

Das Abstandssignal A wird z. B. bestimmt als

$$A = D,$$

wobei davon ausgegangen wird, dass die Daten D bereits in einer aufbereiteten Form vorliegen, d. h. z. B. in einer metrischen Einheit bestimmt sind. Die Rückraumüberwachungs-Steuerungseinrichtung 25 kann das Signal des Positionssensors 15 z. B. in der Art berücksichtigen, dass die von den Abstandssensoren erfassten Daten D um einen vorgegebenen Differenzwert DW korrigiert werden:

$$A = D - DW$$

Das Abstandssignal A kann auch bereits einen Vergleich mit einem ersten Grenzwert G1 beinhalten. In diesem Fall kann das Abstandssignal A z. B. ein digitales Signal mit den Werten 0 und 1 sein:

$$A = 0, \text{ wenn } D > G1$$
$$A = 1, \text{ wenn } D < G1$$

Zur Berücksichtigung des Signals des Positionssensors 15 kann dann z. B. eine der folgenden Korrekturen erfolgen, wobei G2 ein zweiter Grenzwert ist:

$$A = 1,$$

wenn D - DW < G1 oder
D < G1 + DW oder
D < G2, wobei G2 = G1 + DW ist.

In anderen Fällen ist A = 0.
Sofern die erwähnten Daten D1 und D2 der ersten und der zweiten Teilmenge der Abstandssensoren zur Verfügung stehen, gilt für die zuvor erwähnten Beziehungen:

D = D2, wenn das Signal des Positionssensors 15 ein über das Fahrzeugheck 23 hinausragendes Fahrzeugbauteil 10, 19 anzeigt
D = D1, in sonstigen Fällen.

Das Signal des Positionssensors 15 kann, wie zuvor angenommen, ein binäres Signal sein, das nur zwischen den Zuständen "über das Fahrzeugheck hinausragendes Fahrzeugbauteil" und "über das Fahrzeugheck nicht hinausragendes Fahrzeugbauteil" unterscheidet. In einer vorteilhaften Ausgestaltung der Erfindung ist der Positionssensor als Sensor mit einem gewissen Wertebereich ausgebildet, so dass auch Zwischenwerte zwischen den Stellungen "offen" und "geschlossen" signalisiert werden können. So kann z. B. ein Signal P des Positionssensors ein Maß für das Hinausragen des verstellbaren Fahrzeugbauteils 10, 19 über das Fahrzeugheck 23 angeben. Das Signal P kann das Maß des Hinausragens z. B. direkt in einer metrischen Einheit angeben. In diesem Fall kann die Rückraumüberwachungs-Steuerungseinrichtung 25 das Signal P des Positionssensors 15 für die Bestimmung des Abstandssignals A z. B. wie folgt berücksichtigen:

$$A = D - P$$

Die Rückraumüberwachungs-Steuerungseinrichtung 25 kann mit der Bremssteuerungseinrichtung 20 über eine Datenverbindung 26, z. B. ein Bussystem, Daten austauschen. Über die Datenverbindung 26 empfängt die Raumraumüberwachungs-Steuerungseinrichtung 25 von der Bremssteuerungseinrichtung 20 z. B. eine Information über einen eingelegten Rückwärtsgang. Über die Datenverbindung 26 kann die Rückraumüberwachungs-Steuerungseinrichtung 25 ferner ein Bremsanforderungssignal an die Bremssteuerungseinrichtung 20 abgeben, das dieses dann in Form einer Bremsbetätigung ausführt.

Der gemäß Figur 5 an der Rückraumüberwachungs-Steuerungseinrichtung 25 vorgesehene Eingangsanschluss 24 für den Positionssensor 15 kann auch an der Bremssteuerungseinrichtung 20 vorgesehen sein. In diesem Fall überträgt die Bremssteuerungseinrichtung 20 über die Datenverbindung 26 das Signal des Positionssensors 15 an die Rückraumüberwachungs-Steuerungseinrichtung 25. Ebenso ist es möglich, dass das Ausgabemittel 18 mit der Bremssteuerungseinrichtung 20 verbunden ist. In diesem Fall übermittelt die Rückraumüberwachungs-Steuerungseinrichtung 25 über die Datenverbindung 26 die über das Ausgabemittel 18 auszugebende Information an die Bremssteuerungseinrichtung 20, die dann die eigentliche Ausgabe durchführt.

## Patentansprüche

1. Rückraumüberwachungseinrichtung für ein Fahrzeug (1, 2), wobei die Rückraumüberwachungseinrichtung einen oder mehrere Abstandssensoren (6, 11) aufweist, die zur Bestimmung des Abstands des Fahrzeughecks (23) von einem Hindernis (3) eingerichtet sind, und wobei die Rückraumüberwachungseinrichtung wenigstens eine elektronische Steuerungseinrichtung (20, 25) aufweist, die zur Auswertung der von dem oder den Abstandssensoren (6, 11) erfassten Daten (D) und zur Bestimmung eines Abstandssignals (A) eingerichtet ist, das den aktuellen Abstand des Fahrzeughecks (23) von einem Hindernis (3) indiziert, wobei die elektronische Steuerungseinrichtung (20, 25) wenigstens einen Eingangsanschluss (24) für einen Positionssensor (15) aufweist, der zur Erfassung der Position wenigstens eines verstellbaren und in bestimmten Positionen über das Fahrzeugheck (23) hinausragenden Fahrzeugbauteils (10, 19) eingerichtet ist, wobei der Positionssensor (15) über den Eingangsanschluss (24) mit der elektronischen Steuerungseinrichtung (20, 25) verbindbar ist, und die elektronische Steuerungseinrichtung (20, 25) dazu eingerichtet ist, das Abstandssignal (A) in Abhängigkeit vom Signal des Positionssensors (15) zu bestimmen, **dadurch gekennzeichnet, dass** die Rückraumüberwachungseinrichtung wenigstens zwei Abstandssensoren (6, 11) aufweist und die elektronische Steuerungseinrichtung (20, 25) dazu eingerichtet ist, das Abstandssignal (A) in Abhängigkeit von den von einer ersten Teilmenge (6) der Abstandssensoren (6, 11) erfassten Daten (D1) zu bestimmen, wenn das Signal des Positionssensors (15) ein über das Fahrzeugheck (23) hinausragendes Fahrzeugbauteil (10, 19) nicht anzeigt, und das Abstandssignal (A) in Abhängigkeit von den von einer zweiten Teilmenge (11) der Abstandssensoren (6, 11) erfassten Daten (D2) zu bestimmen, wenn das Signal des Positionssensors (15) ein über das Fahrzeugheck (23) hinausragendes Fahrzeugbauteil (10, 19) anzeigt.

2. Rückraumüberwachungseinrichtung nach Anspruch 1, **dadurch gekennzeichnet, dass** die elektronische Steuerungseinrichtung (20, 25) dazu eingerichtet ist, die von dem oder den Abstandssensoren (6, 11) erfassten Daten (D) um einen vorgegebenen Differenzwert (DW) zu korrigieren, wenn das Signal des Positionssensors (15) ein über das Fahrzeugheck (23) hinausragendes Fahrzeugbauteil (10, 19) anzeigt.

3. Rückraumüberwachungseinrichtung nach Anspruch 1, **dadurch gekennzeichnet, dass** die elektronische Steuerungseinrichtung (20, 25) dazu eingerichtet ist, die von dem oder den Abstandssensoren (6, 11) erfassten Daten (D) mit wenigstens einem vorgegebenen ersten Grenzwert (G1) zu vergleichen und hieraus ein Abstandssignal (A) zu bestimmen, das das Erreichen oder Unterschreiten eines vorgegebenen Abstands des Fahrzeughecks (23) von dem Hindernis (3) indiziert.

4. Rückraumüberwachungseinrichtung nach Anspruch 3, **dadurch gekennzeichnet, dass** die elektronische Steuerungseinrichtung (20, 25) dazu eingerichtet ist, die von dem oder den Abstandssensoren (6, 11) erfassten Daten (D), den vorgegebenen ersten Grenzwert (G1) oder die Differenz zwischen den von dem oder den Abstandssensoren (6, 11) erfassten Daten (D) und dem vorgegebenen ersten Grenzwert (G1) um einen vorgegebenen Differenzwert (DW) zu korrigieren oder für den Vergleich einen vorgegebenen zweiten Grenzwert (G2) zu verwenden, wenn das Signal des Positionssensors (15) ein über das Fahrzeugheck (23) hinausragendes Fahrzeugbauteil (10, 19) anzeigt.

5. Rückraumüberwachungseinrichtung nach einem der vorhergehenden Ansprüche, **dadurch gekennzeichnet, dass** die elektronische Steuerungseinrichtung (20, 25) dazu eingerichtet ist, das Abstandssignal (A) über Ausgabemittel der Rückraumüberwachungseinrichtung oder über eine Schnittstelle zu sonstigen Ausgabemitteln (18) des Fahrzeugs (1, 2) optisch, haptisch und/oder akustisch auszugeben.

6. Rückraumüberwachungseinrichtung nach einem der vorhergehenden Ansprüche, **dadurch gekennzeichnet, dass** die elektronische Steuerungseinrichtung (20, 25) dazu eingerichtet ist, in Abhängigkeit vom Abstandssignal (A) ein Bremsbetätigungssignal zu erzeugen, durch das wenigstens eine Fahrzeugbremse automatisch betätigt wird.

7. Rückraumüberwachungseinrichtung nach Anspruch 1, **dadurch gekennzeichnet, dass** die erste Teilmenge (6) der Abstandssensoren (6; 11) zur Anbringung am Fahrzeugheck (23) und die zweite Teilmenge (11) der Abstandssensoren (6, 11) zur Anbringung an dem verstellbaren und in bestimmten Positionen über das Fahrzeugheck hinausragenden Fahrzeugbauteil (10, 19) eingerichtet ist.

8. Rückraumüberwachurigseinrichtung nach einem der vorhergehenden Ansprüche, wobei die elektronische Steuerungseinrichtung (20, 25) einen oder mehrere Anschlüsse zum Anschluss des einen oder der mehreren Abstandssensoren (6, 11) aufweist.

9. Fahrzeug (1, 2) mit einem verstellbaren und in bestimmten Positionen über das Fahrzeugheck (23) hinausragenden Fahrzeugbauteil (10, 19) und einer Rückraumüberwachungseinrichtung nach einem der Ansprüche 1 bis 8.

10. Fahrzeug nach Anspruch 9, **dadurch gekennzeichnet, dass** die Rückraumüberwachungseinrichtung wenigstens zwei Abstandssensoren (6, 11) aufweist und eine erste Teilmenge (6) der Abstandssensoren (6, 11) am Fahrzeugheck (23) angebracht ist und eine zweite Teilmenge (11) der Abstandssensoren (6, 11) an dem verstellbaren und in bestimmten Positionen über das Fahrzeugheck (23) hinausragenden Fahrzeugbauteil (10, 19) angebracht ist.

**Claims**

1. Rear area monitoring device for a vehicle (1, 2), wherein the rear area monitoring device comprises one or a plurality of distance sensors (6, 11), which are arranged to determine the distance of the rear of the vehicle (23) from an obstruction (3), and wherein the rear area monitoring device comprises at least one electronic control device (20, 25), which is arranged to evaluate the data (D) detected by the distance sensor(s) (6, 11) and to determine a distance signal (A) that indicates the actual distance of the rear of the vehicle (23) from an obstruction (3), wherein the electronic control device (20, 25) comprises at least one input connector (24) for a position sensor (15) that is arranged to detect the position of at least one adjustable component of the vehicle (10, 19) that in certain positions protrudes beyond the rear of the vehicle (23), wherein the position sensor (15) can be connected via the input connector (24) to the electronic control device (20, 25) and the electronic control device (20, 25) is arranged to determine the distance signal (A) depending on the signal of the position sensor (15), **characterized in that** the rear area monitoring device comprises at least two distance sensors (6, 11) and the electronic control device (20, 25) is arranged to determine the distance signal (A) depending on the data (D1) detected by a first subset (6) of the distance sensors (6, 11) if the signal of the position sensor (15) is not indicating a vehicle component (10, 19) protruding beyond the rear of the vehicle (23), and to determine the distance signal (A) depending on the data (D2) detected by a second subset (11) of the distance sensors (6, 11) if the signal of the position sensor (15) is indicating a vehicle component (10, 19) protruding beyond the rear of the vehicle (23).

2. Rear area monitoring device according to Claim 1, **characterized in that** the electronic control device (20, 25) is arranged to correct the data (D) detected by the distance sensor(s) (6, 11) by a specified difference value (DW) if the signal of the position sensor (15) is indicating a vehicle component (10, 19) protruding beyond the rear of the vehicle (23).

3. Rear area monitoring device according to Claim 1, **characterized in that** the electronic control device (20, 25) is arranged to compare the data (D) detected by the distance sensor(s) (6, 11) with at least one specified first limit (G1) and to determine therefrom a distance signal (A) that indicates reaching or falling below a specified distance of the rear of the vehicle (23) from the obstruction (3).

4. Rear area monitoring device according to Claim 3, **characterized in that** the electronic control device (20, 25) is arranged to correct the data (D) detected by the distance sensor(s) (6, 11), the specified first limit (G1) or the difference between the data (D) detected by the distance sensor(s) (6, 11) and the specified first limit (G1) by a specified difference value (DW) or to use a specified second limit (G2) for the comparison if the signal of the position sensor (15) is indicating a vehicle component (10, 19) protruding beyond the rear of the vehicle (23).

5. Rear area monitoring device according to any one of the preceding claims, **characterized in that** the electronic control device (20, 25) is arranged to visually, haptically and/or acoustically output the distance signal (A) via output means of the rear area monitoring device or via an interface to other output means (18) of the vehicle (1, 2).

6. Rear area monitoring device according to any one of the preceding claims, **characterized in that** the electronic control device (20, 25) is arranged to generate, depending on the distance signal (A), a brake actuation signal by means of which at least one vehicle brake is automatically operated.

7. Rear area monitoring device according to Claim 7, **characterized in that** the first subset (6) of the distance sensors (6, 11) is arranged for attachment to the rear of the vehicle (23) and the second subset (11) of the distance sensors (6, 11) is arranged for attachment to the adjustable vehicle component (10, 19) that in certain positions protrudes beyond the rear of the vehicle.

8. Rear area monitoring device according to any one of the preceding claims, wherein the electronic control device (20, 25) comprises a plurality of connectors for connecting one or a plurality of the distance sensors (6, 11).

9. Vehicle (1, 2) with an adjustable vehicle component (10, 19) that in certain positions protrudes beyond the rear of the vehicle (23) and a rear area monitoring device according to any one of the Claims 1 to 8.

10. Vehicle according to Claim 9, **characterized in that** the rear area monitoring device comprises at least two distance sensors (6, 11) and a first subset (6) of the distance sensors (6, 11) is attached to the rear of the vehicle (23) and a second subset (11) of the distance sensors (6, 11) is attached to the adjustable vehicle component (10, 19) that in certain positions protrudes beyond the rear of the vehicle (23).

**Revendications**

1. Système de surveillance de l'arrière d'un véhicule (1, 2), dans lequel le système de surveillance de l'arrière présente un ou plusieurs capteurs de distance (6, 11) conçus pour déterminer la distance entre l'arrière du véhicule (23) et un obstacle (3), et dans lequel le système de surveillance de l'arrière comporte au moins un système de commande électronique (20, 25) conçu pour exploiter les données (D) acquises au moyen du ou des capteurs de distance (6, 11) et pour générer un signal de distance (A) indiquant la distance réelle entre l'arrière du véhicule (23) et un obstacle (3), dans lequel le système de commande électronique (20, 25) comporte au moins une connexion d'entrée (24) pour un capteur de position (15) conçu pour détecter la position d'au moins un composant (10, 19) du véhicule déplaçable et dépassant de l'arrière du véhicule (23) dans des positions définies, dans lequel le capteur de position (15) peut être relié par le biais de la connexion d'entrée (24) au système de commande électronique (20, 25) et le système de commande électronique (20, 25) est conçu pour générer le signal de distance (A) en fonction du signal du capteur de position (15), **caractérisé en ce que** le système de surveillance de l'arrière comporte au moins deux capteurs de distance (6, 11) et **en ce que** le système de commande électronique (20, 25) est conçu pour générer le signal de distance (A) en fonction des données (D1) acquises par un premier sous-ensemble (6) des capteurs de distance (6, 11) lorsque le signal du capteur de position (15) n'indique pas que le composant (10, 19) du véhicule dépasse de l'arrière du véhicule (23), et pour générer le signal de distance (A) en fonction des données (D2) acquises par un second sous-ensemble (11) des capteurs de distance (6, 11) lorsque le signal du capteur de position (15) indique que le composant (10, 19) du véhicule dépasse de l'arrière du véhicule (23).

2. Système de surveillance de l'arrière d'un véhicule selon la revendication 1, **caractérisé en ce que** le système de commande électronique (20, 25) est conçu pour corriger les données (D) acquises par le ou les capteurs de distance (6, 11) d'une valeur de différence prédéterminée (DW) lorsque le signal du capteur de position (15) indique que le composant (10, 19) du véhicule dépasse de l'arrière du véhicule (23).

3. Système de surveillance de l'arrière d'un véhicule selon la revendication 1, **caractérisé en ce que** le système de commande électronique (20, 25) est conçu pour comparer les données (D) acquises par le ou les capteurs de distance (6, 11) à au moins une première valeur limite prédéterminée (G1) et pour générer ainsi un signal de distance (A) qui indique que l'arrière du véhicule (23) a atteint ou dépassé une distance prédéterminée par rapport à l'obstacle (3).

4. Système de surveillance de l'arrière d'un véhicule selon la revendication 3, caractérisé en ce le système de commande électronique (20, 25) est conçu pour utiliser les données (D) acquises par le ou les capteurs de distance (6, 11), la première valeur limite prédéterminée (G1) ou la différence entre les données (D) acquises par le ou les capteurs de distance (6, 11) et la première valeur limite prédéterminée (G1) afin de corriger une valeur de différence prédéterminée (DW) ou d'utiliser une seconde valeur limite prédéterminée (G2) aux fins de la comparaison lorsque le signal du capteur de position (15) indique qu'un composant (10, 19) du véhicule dépasse de l'arrière du véhicule (23).

5. Système de surveillance de l'arrière d'un véhicule selon l'une quelconque des revendications précédentes, caractérisé en ce le système de commande électronique (20, 25) est conçu pour délivrer de manière optique, haptique et/ou acoustique le signal de distance (A) par l'intermédiaire de moyens de sortie du système de surveillance de l'arrière d'un véhicule ou par l'intermédiaire d'une interface avec de tels moyens de sortie (18) du véhicule (1, 2).

6. Système de surveillance de l'arrière d'un véhicule selon l'une quelconque des revendications précédentes, caractérisé en ce le système de commande électronique (20, 25) est conçu pour générer un signal d'actionnement des freins en fonction du signal de distance (A), au moyen duquel au moins un frein du véhicule est actionné.

7. Système de surveillance de l'arrière d'un véhicule selon la revendication 1, **caractérisé en ce que** le premier sous-ensemble (6) des capteurs de distance (6, 11) est conçu pour être installé sur l'arrière du véhicule (23) et **en ce que** le second sous-ensemble (11) de capteurs de distance (6, 11) est conçu pour être monté sur le composant (10, 19) du véhicule déplaçable et dépassant de l'arrière du véhicule dans des positions définies.

8. Système de surveillance de l'arrière d'un véhicule selon l'une quelconque des revendications précédentes, dans lequel le système de commande électronique (20, 25) comporte une ou plusieurs connexions pour le raccordement dudit ou desdits multiples capteurs de distance (6, 11).

9. Véhicule (1, 2) comportant un composant (10, 19) du véhicule déplaçable et dépassant de l'arrière du véhicule (23) dans des positions définies et un système de surveillance de l'arrière d'un véhicule selon l'une quelconque des revendications 1 à 8.

10. Véhicule selon la revendication 9, **caractérisé en ce que** le système de surveillance de l'arrière d'un véhicule comporte au moins deux capteurs de distance (6, 11) et **en ce qu'**un premier sous-ensemble (6) des capteurs de distance (6, 11) est installé sur l'arrière du véhicule (23) et **en ce qu'**un second sous-ensemble (11) des capteurs de distance (6, 11) est installé sur le composant (10, 19) du véhicule déplaçable et dépassant de l'arrière du véhicule (23) dans des positions définies.

Fig. 3

Fig. 1

Fig. 2

Fig. 4

EP 2 742 499 B1

Fig. 5

EP 2 742 499 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19831262 C2
- US 20060103512 A1
- DE 102009032542 A1
- EP 0602353 A1